# EUROPEAN PATENT SPECIFICATION

(11) **EP 1 779 221 B1**
(45) Date of publication and mention of the grant of the patent: **02.09.2020**
(21) Application number: 05780628.3
(22) Date of filing: 25.07.2005
(51) Int. Cl.: G06F 3/0346, G09B 21/00, G06F 3/01

(54) **METHOD AND APPARATUS FOR COMMUNICATING GRAPHICAL INFORMATION TO A VISUALLY IMPAIRED PERSON USING HAPTIC FEEDBACK**
VERFAHREN UND VORRICHTUNG ZUR WEITERGABE GRAFISCHER INFORMATIONEN AN EINE SEHBEEINTRÄCHTIGTE PERSON MITHILFE HAPTISCHER RÜCKKOPPLUNG
PROCEDE ET APPAREIL DE COMMUNICATION D'INFORMATIONS GRAPHIQUES A UN MALVOYANT PAR REACTION HAPTIQUE

(30) Priority: 30.07.2004 US 903779
(43) Date of publication of application: 02.05.2007
(73) Proprietor: ORANGE, 75015 Paris (FR)
(72) Inventor: CHESNAIS, Pascal, Cambridge, MA 02142 (US); RANDALL, Joshua, Cambridge, MA 02142 (US)
(86) International application number: PCT/IB2005/002625
(87) International publication number: WO 2006/013473

(56) References cited:
- EP-A2- 0 931 285
- WO-A-01/43114
- WO-A-97/31333
- US-A- 3 229 387
- US-A- 5 506 605
- US-A- 5 825 350
- US-A- 5 898 421
- US-A- 5 898 599
- US-A- 6 159 013
- US-A1- 2002 138 562
- US-A1- 2002 140 673

## Description

The invention relates generally to equipment and techniques for enabling a person to perceive graphical information using the sense of touch such as, for example, assisting visually impaired persons.

Conveying information to visually impaired persons through the sense of touch is well established. For example, there are currently four commonly-utilized types of Braille text which employ unique patterns of dots that are sensed by passing one's fingertips over them and which are arranged to designate numbers, letters, and grammatical symbols. Although Braille is useful for conveying such alphanumeric information to visually impaired persons, it is not well adapted for situations in which graphical information displayable as a two-dimensional image is to be conveyed. As used herein, the term "graphical information" refers to, for example, pictures, paintings, maps, floor plans, layouts, schematic diagrams, sketches, and drawings. In many cases, it is critically important to be able to perceive the graphical information. For example, floor plans are typically utilized to show the layout of fire exits in office buildings and hotels. Visually impaired persons would benefit from having a portable, hand-held device for learning the locations of these exits, yet currently existing techniques provide no practical mechanism by which the visually impaired are able to perceive graphical information in such a way.

Many thoughts, concepts, and ideas that are easily conveyed in graphical form are relatively difficult and time-consuming to convey using linguistic forms of communication. To provide enhanced communication of graphical information, electronic techniques have been developed which enable users to communicate using two-dimensional images of hand-drawn sketches shown on a display screen of a wireless handheld device. One example of such a graphical communication technique is a service known as Scribble™ which is disclosed in US provisional patent application serial no. 60/434,991 and International application no. PCT/EP03/13845, the content of both of which is hereby incorporated by reference. Scribble™ users communicate by updating a shared virtual page using a mobile phone with a stylus interface, or by using an Internet-connected computer with a mouse or a stylus based pointer. Although Scribble™ is well adapted to the needs of hearing and speaking impaired users by providing an expressive visual mode of communication without the use of audio, it does not allow visually impaired users to share in this genre of visually-based communication.

Since graphical information is by definition visually based, visually impaired persons cannot fully perceive such information unless it is converted into a form suitable for perception by a non-impaired sense, such as audio. The expression "visually impaired" as used herein applies not only to persons with a permanent disability but also to persons who, for example, occasionally encounter conditions which temporarily affect their ability to see normally. Converting graphical information into audio signals is problematic. While it may be possible to utilize sonic imaging techniques in order to visualize simple shapes, these techniques do not enable enjoyment or appreciation of more complex two-dimensional drawings. Moreover, they prevent the user from simultaneously participating in voice communication. Written text can be presented by providing spoken transcription of written communication processed by handwriting recognition software, but no existing software package is equipped to provide a complete spoken description of a drawing, for example.

Converting graphical information into tactile form is advantageous relative to audio-based techniques. A tactile interface allows visually impaired persons to "feel" their way through a drawing without compromising or monopolizing other human senses. An illustrative example of a tactile interface is Phantom™, available from SensAble Technologies, Inc., of Woburn, Massachusetts. Phantom™ provides a force-feedback mechanism which guides visually impaired persons as they attempt to trace lines in a drawing. The motorized interface leads users through a drawing according to the order in which the lines were drawn. This approach suffers from various drawbacks. First of all, Phantom™ is a fixed, nonportable device that must be hard-wired as a wired peripheral to a desktop computer, with corresponding weight and power requirements. Given the complexity of the device, it is expensive and, therefore, outside the domain of a mass market device.

Another haptic interface device is IBM's Tactile Trackpoint™ which provides tactile feedback to a user as a cursor is positioned. Nestled between the G, H, and B keys on many IBM notebook computers is a small projection shaped like the eraser end of a conventional pencil. This projection, termed a "TrackPoint™ pointing device", is often referred to as a "little red button. "TrackPoint" is available on the IBM ThinkPad™ line of computers, available from the IBM Corp. of Armonk, NY. Similar devices are now available from other manufacturers, such as NEC and Dell. More recently, IBM has improved the TrackPoint™ device through the addition of new features and modifications. For example, IBM's Tactile TrackPoint™ has an actuator beneath the TrackPoint device which can stimulate a user's finger. As the position of the cursor is changed, this actuator bumps up against the user's finger to provide tactile feedback indicative of the meaning of the cursor's present location. With Tactile Trackpoint™, a user can "feel" icons, title bars, menu items, and window borders. Such tactile feedback allows more accurate movement and selection of menu items by complementing visual feedback with a sense of touch. Unfortunately, this approach is not well suited to visually impaired persons because it is dependent upon visual observation of a changing cursor position. Moreover, displacement of the Trackpoint™ device is monitored within a tightly-confined two-dimensional space. This provides the visually impaired person with a spatial displacement which is inadequate for perceiving many graphical images.

Document WO 01/431114 discloses a tactile feedback mouse device connected to a computer, the mouse device having an actuator for enhancing interactions and manipulation in a displayed graphical environment.

US 5,506,605 discloses a three-dimensional mouse with tactile feedback.

One aspect of the present invention is directed to a technique for providing a haptic feedback for enabling a visually impaired person to mentally visualize a two dimensional image that includes at least one line. Graphical information data corresponding to the image is stored. A portable, handheld device including three dimensional position sensing means is manually movable by the visually impaired person through an adjacent space, for providing a position signal representative of a current position within the space to where the device is moved by the person. The device position signal representative of a current position within the space is related to a position signal in the two-dimensional plane of the image.The stored graphical information data is compared with the position signal in the two dimensional plane to generate a haptic output activation signal when the current position in the two-dimensional plane is determined to overlap an image line. A tactile feedback mechanism in the portable device is responsive to the haptic output activation signal for providing to the person a tactile indication to create a mental image that the current position of the device is at a line of the image.

Another aspect of the present invention is directed to a technique for providing a haptic feedback for enabling a visually impaired person to mentally visualize an image that includes at least one line. The image is stored electronically. A portable, handheld device including position sensing means for providing a position signal when the device is moved by the person. A monitoring means monitors the position signal as the device is moved by the person, and a tactile feedback mechanism in the device is responsive to the monitoring means for providing to the person a tactile indication when a current position of the device corresponds to a line of the image.

Another aspect of the present invention is directed to a technique for providing a haptic feedback for enabling a visually impaired person to navigate a document composed of alphanumeric characters at respective character locations. The graphical information data corresponding to the document is stored electronically. A portable, handheld device including position sensing means is manually movable by the visually impaired person through an adjacent space, for providing a position signal representative of a current position within the space to where the device is moved by the person. A leading feedback determining means is responsive to the position signal for generating a leading feedback control signal, and a leading feedback mechanism in the device is responsive to the leading feedback control signal for providing a directional tactile indication to the visually impaired person for moving the device toward a particular one of the character locations. A tactile pad is adapted to be in contact with a finger of the person and it includes means for selectively forming a Braille counterpart of the alphanumeric character at the particular one of the character locations when the device reaches a position corresponding to the particular one of the character locations.

Another aspect of the present invention is directed to a technique for providing a haptic feedback for assisting a visually impaired person to comprehend an image that includes a plurality of line elements drawn in a particular time ordered sequence. Graphical information data corresponding to the image is stored such that the time ordered sequence in which the line elements were drawn is determinable. A portable, handheld device including position sensing means is manually movable by the visually impaired person through an adjacent space, for providing a position signal representative of a current position within the space to where the device is moved by the person. A leading feedback determining means is responsive to the position signal for generating a leading feedback control signal. A leading feedback mechanism in the device is responsive to the leading feedback control signal for providing a directional tactile indication to the visually impaired person for moving the device from the current position toward a particular image element based on the time ordered sequence in which the line elements were drawn.

Another aspect of the present invention is directed to a technique for enabling a visually impaired person to electronically draw an addition to an existing electronically reproducible image that includes at least one line. Graphical information data corresponding to the image is stored. A portable, handheld device including position sensing means is manually movable by the visually impaired person through an adjacent space, for providing a position signal representative of a current position within said space to where the device is moved by the person. A means responsive to the position signal controls a tactile feedback mechanism in the portable device for providing to the person a tactile indication to create a mental visualization of the image. A drawing control means on the device is actuatable by the person to designate any subsequently occurring position signal as line information representative of an image addition drawn by the person.

Another aspect of the present invention is directed to a technique for providing a haptic feedback for enabling a visually impaired person to mentally visualize an image that includes at least one line. A portable, handheld sensing device is adapted to be manually moved by the person through a three-dimensional virtual reality environment related to a two-dimensional image that includes one or more lines. A projection mechanism is provided for projecting the position information into the two-dimensional image. A tactile feedback mechanism is responsive to the position sensing mechanism sensing a position in the three-dimensional virtual reality environment that is projected into the one or more lines, for providing a tactile indication that the portable sensing device is passing over a line.

Those aspects and others appear in the following description of an implementation with reference to the appended drawings wherein:
FIG. 1 is a diagram for illustrating how a portable sensing device of the present invention can be used to locate lines that constitute a two-dimensional image.
FIG. 2 is a diagrammatic representation of a three-dimensional virtual environment in which positions of the portable sensing device are determined and projected into the two-dimensional image of FIG. 1.
FIG. 3 is a hardware block diagram showing an exemplary system in which the portable sensing device depicted in FIG. 1 is employed.
FIG. 4 is a flowchart setting forth an operational sequence performed by the file server of FIG. 3 according to the present invention.
FIG. 5 is a flowchart setting forth an operational sequence performed by the portable sensing device of FIGs. 1 and 3 according to the present invention.
FIG. 6 is a flowchart setting forth an operational sequence performed by the file server of FIG. 3 according to a further embodiment of the present invention.
FIG. 7 is a flowchart setting forth an operational sequence performed by the portable sensing device of FIGs. 1 and 3 according to a further embodiment of the present invention.
FIG. 8 is an illustrative two-dimensional image which may be communicated to a visually impaired person with the system of FIG. 3.

Since a visually impaired person cannot perceive an image by using the sense of sight, the present invention enables such person to mentally visualize the image by "feeling" the image. More specifically, a portable sensing device 40 is provided to enable the visually impaired person to "feel" where the lines are of the graphical information, displayable as a two-dimensional image, as the device 40 is manually moved relative to the image. When device 40 reaches a position that is located over a line which is part of the image, a haptic output is generated by a tactile actuation mechanism within device 40 so as to be felt by the visually impaired person as an indication of that condition. The visually impaired person visualizes in his mind's eye a blank "sheet" of paper. By manually positioning device 40 within an adjacent space within the person's reach that corresponds to that "sheet", a certain association is established by the person in his mind's eye between the physical position of device 40 within such space and a respective visualized point on the "sheet". Also, by manually moving device 40 within such space, the person creates a corresponding, visualized path on the "sheet".

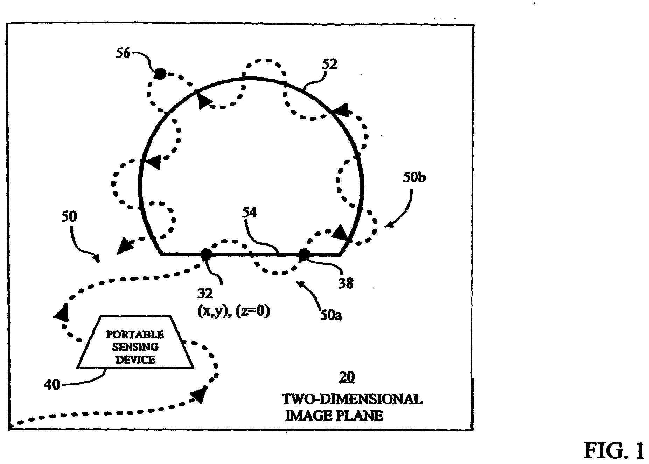

For illustrative purposes to facilitate the explanation of the present invention, Fig. 1 shows an image of the graphical information drawn on a sheet. The sheet of Fig. 1 can be real, e.g. paper, or electronic, e.g. on an electronic display screen. In actual use, however, the sheet (and image) are virtual in that the image exists as graphical information data stored in a database, but such data need not actually be displayed. Use of a virtual image is sufficient for the visually impaired person because such person cannot see it anyway. The invention relies on obtaining, storing, processing and comparing data, namely the data of the graphical information and the position data of the portable sensing device, to accomplish its task.

FIG. 1 shows a diagrammatic representation of portable sensing device 40 for tracing a displayed image of graphical information that includes one or more lines or curves 52, 54 (all being referred to below, for reasons of convenience, as "lines") presented in a two-dimensional image plane 20, so as to enable the image to be perceived (i.e. felt, visualized) by visually impaired persons through the sense of touch. For illustrative purposes, assume that portable sensing device 40 is first manually moved by the visually impaired person along an arbitrary path 50 in two-dimensional image plane 20. When path 50 intersects any point on line 54 of the image, such as point 32, a tactile actuation mechanism on portable sensing device 40 is activated to indicate to the visually impaired person through the sense of touch that a line of the image has been reached. The visually impaired person then seeks to trace the line by trial and error movements, such as 50a and 50b, in an effort to trigger the haptic output. By triggering many such haptic outputs at closely spaced points (of course, the haptic output remains ON as long as device 40 exactly follows a line), the user can visualize the line mentally and, in turn, the entire image.

Point 32, as well as all other points of the graphical information shown in two-dimensional image plane 20, are defined by a set of coordinates (x,y,z) where z=0. For every point along the path of device 40 which does not intersect any line, such as point 56, the tactile actuation mechanism is not activated.

As a practical matter, it is inconvenient to require the visually impaired person to navigate a drawing while confining motion of device 40 to a particular two-dimensional image plane 20. A visually impaired person would only be able to do so if device 40 were to be moved along a flat surface. However, such a flat surface may not always be readily available. It is preferable to allow the visually impaired person to freely move device 40 through a three-dimensional space within reach. Therefore, it is necessary to convert the motion of device 40 in a three dimensional environment so that the positions are projected into the two-dimensional plane in which the graphical information is imaged.

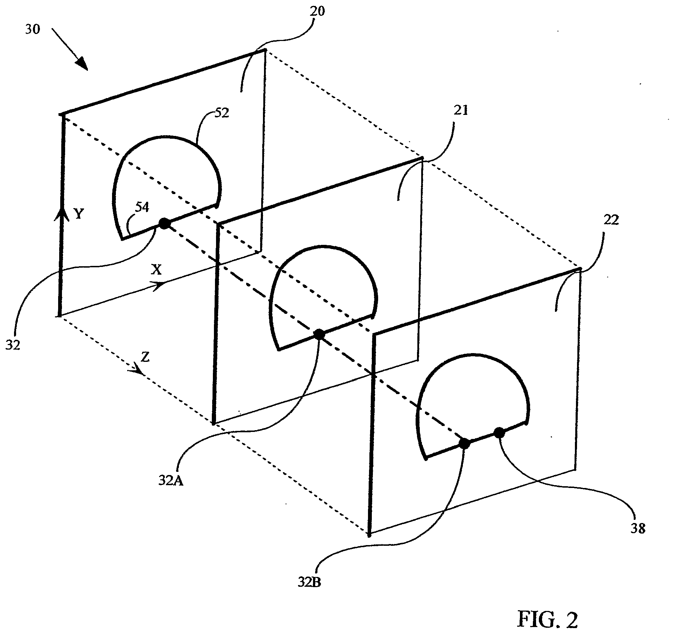

FIG. 2 is a diagrammatic representation of a three-dimensional virtual environment 30 relative to two-dimensional image plane 20 of FIG. 1. Position information in three-dimensional virtual environment 30 is gathered by portable sensing device 40 and projected into two-dimensional image plane 20. A relationship is established so that the three-dimensional data has as associated counterpart in the two-dimensional data. Illustratively, this can be done by projecting the three-dimensional virtual environment 30 into the two-dimensional image 20 using linear projection techniques which are well known to those skilled in the art, although use of other projection techniques is also contemplated by the invention. An exemplary projection of lines 52, 54 of FIG. 1 in three-dimensional virtual environment 30 is shown in FIG. 2. Two-dimensional image plane 20 is reproduced along the z-axis as one or more (of course, it could be an infinite number) additional image planes, such as image planes 21, 22. The x- and y- coordinates of all points in two-dimensional image plane 20 are retained in image planes 21 and 22. However, within each image plane 21, 22, a constant value is assigned to the z-coordinates of these points. For example, all points within image plane 21 have z-coordinates of +1. All points within image plane 22 have z- coordinates of +2.

FIG. 1 shows crossing point 32 in image plane 20. FIG. 2 shows the same crossing point as 32 in plane 20, 32A in plane 21 and 32B in plane 22. Their respective coordinates are (xₐ,y_{b},z_{c}), (xₐ, y_{b}, z_{d}) and (xₐ, y_{b}, zₑ), where z_{c} = 0, z_{d} = 1 and zₑ = 2. With this arrangement, wherein the x, y coordinates in the planes are identical for corresponding points in the respective planes, in order to project point 32A in plane 21 into plane 20, for example, Z_{d} is simply set to zero.

Illustratively, portable sensing device 40 can provide x,y,z coordinates for each discreet position reached as device 40 is moved by the visually impaired person through environment 30. Thus, if such motion moves from plane 21 to plane 22, let us presume that one point where the image is crossed is at point 32A in plane 21 having the coordinates xₐ, y_{b}, z_{d}. The next crossing point is shown as 38 in plane 22 and having the coordinates x_{g}, yₕ, zₑ. In this particular example, the crossing points 32A and 38 in planes 21 and 22 are then projected into two-dimensional image plane 20 simply by setting z=0. Thus, point 32A when projected from environment 30 into plane 20 has the coordinates xₐ,y_{b}, whereas point 38 when projected from environment 30 into plane 20 (see point 38 in Fig. 1) has the coordinates x_{g},yₕ.

The graphical information data displayable as images are stored in a database as, for example, pixel-by-pixel locations with their x, y coordinates specified in two-dimensional image plane 20. The tactile actuation mechanism of portable sensing device 40 is activated when the portable sensing device intersects, or overlaps, any point in three-dimensional virtual environment 30 that is projected into the one or more lines 52, 54, thereby communicating to the visually impaired person that portable sensing device 40 is located over a line. This is determined by comparing the current position of device 40, as projected into image plane 20, with the locations stored in the database. When the comparison results in a match, a crossing point has been identified and the haptic output is generated.

From an intuitive standpoint, one way to understand how portable sensing device 40 allows a visually impaired user to be able to "feel" two-dimensional drawings in three-dimensional virtual environment 30 is to regard the two dimensional image in plane 20 as having, in essence, "walls" projecting outwardly from lines 52, 54 in the drawing. As the user waves portable sensing device 40 in three-dimensional virtual environment 30, the user is essentially "scanning" for the drawing. When the user passes portable sensing device 40 past a "wall" projecting from the drawing into three-dimensional virtual environment 30, the device 40 will present a haptic texture for the width of the drawn surface. Portable sensing device 40 creates a virtual environment that may be perceived by the user as a virtual brush, canvas, and easel. The intent is to mimic as closely as possible the experience that an artist would experience when drawing on a canvas placed vertically on an easel. This is important. Although conceivably the image could be placed horizontally with the "walls" projecting upwardly, the particular type of device 40 described in detail below as using a gyroscopic mouse operates with the image being vertical and the "walls" projecting laterally therefrom. This is because such device provides x and y outputs, but not a z output. Portable sensing device 40 is preferably designed to work in a wide variety of operating environments, including wired, wireless, fixed, and mobile.

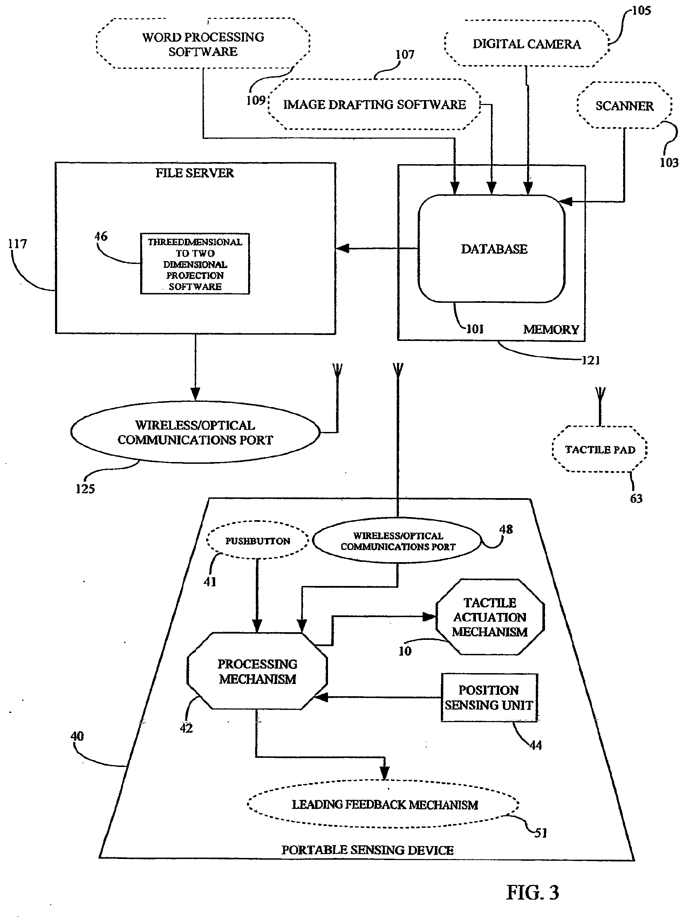

FIG. 3 is a hardware block diagram showing an exemplary system in which the portable sensing device 40 depicted in FIGs. 1 and 2 is employed. The system includes a database 101 stored in memory 121. Memory 121 is implemented using any electronically readable data storage medium, such as a hard disk drive, CD-ROM, random-access memory (RAM), magnetic tape, read-only memory (ROM), or floppy disk. Database 101 can include one or more two-dimensional image arrays that are each stored as electronic files. The two-dimensional image arrays specify pixel-by-pixel locations as (x,y) positions in two-dimensional image plane 20 (FIGs. 1 and 2). Illustratively, graphical information stored in database 101 is generated using input from at least one of optional image drafting software 107, an optional digital camera 105, and an optional scanner 103. Use of word processing software 109 will be explained below. A file server 117, implemented with a fixed or mobile host computing device, is programmed to access, retrieve and process files from database 101.

File server 117 is programmed with three-dimensional to two-dimensional projection software 46. File server 117 uploads the three-dimensional position information from portable sensing device 40 and projects it, as described above, into the two-dimensional image plane. An illustrative uploading mechanism utilizes a first wireless/optical communications port 125 associated with file server 117 and a second wireless/optical communications port 48 associated with portable sensing device 40. File server 117 uploads position information transmitted by the first wireless/optical communications port 48 of portable sensing device 40 and received at the second wireless/optical communications port 125. Although the configuration of FIG. 3 shows the use of wireless/optical communication ports 125, 48, this is solely for purposes of illustration, as the invention also contemplates the use of wired connections between portable sensing device 40 and file server 117. Position information may be communicated from portable sensing device 40 to file server 117 using any wired or wireless communication technique, such as use of a serial UART. If wireless/optical communications ports (125, 48, respectively) are employed, such ports may be equipped to communicate using a Wireless Local Area Network (WLAN) connection. The techniques of the present invention are also applicable in a Bluetooth™ environment where portable sensing device 40 communicates with a smart telephonic device adapted to communicate with file server 117.

Pursuant to one illustrative embodiment of the invention, portable sensing device 40 is implemented using a 3-D gyroscopic mouse (see details provided below) equipped with a tactile actuation mechanism 10 in the form of a vibrating motor. Position sensing unit 44 may be implemented using gyroscopes, accelerometers, and/or distance sensors to perform three-dimensional position sensing in three-dimensional virtual environment 30. Accordingly, position sensing unit 44 may provide three-dimensional position information directly, or may provide derivatives (such as angular velocity) that are integrated in software to obtain three-dimensional position information. Position is determined with reference to the body of a user who may, but need not, be a visually impaired person. The user is assumed to be holding portable sensing device 40 in his or her hand.

One example of a suitable 3-D gyroscopic mouse is known as the Gyrations Ultra Cordless Optical Mouse™, available from Gyration, Inc, of Saratoga, CA. Further details regarding this device are disclosed in U.S. Patent No. 5,440,326, U.S. Patent No. 5,898,421, and U.S. Patent No. 5,825,350. For implementing position sensing unit 44, the Gyrations Gyroscopic Mouse™ utilizes an assembly within the mouse housing that includes a dual axis gyroscope. This assembly is available from Gyration, Inc., of Saratoga, CA as the MicroGyro 100 ™. The gyroscopes in the MicroGyro 100™ assembly are monitored and controlled by a software driver to detect position changes in a three-dimensional virtual reality space in front of the user. More specifically, the gyroscopes use the Coriolis effect to sense rotation and angular changes about a vertical axis and a horizontal axis, thus permitting efficient mapping of three-dimensional position information to a two-dimensional image or document. The gyroscopes respond to swiveling or rotation in a horizontal plane (a plane perpendicular to a gravitational source) by outputting a value for x (refer to FIG. 2). Likewise, the gyroscopes respond to swiveling or rotation in a vertical plane by outputting a value for y.

In operation, a user produces swiveling or rotation in a horizontal plane around the vertical axis by holding portable sensing device 40 (FIG. 3) with a substantially stiff wrist and a substantially straight elbow, and sweeping the device from side to side. Such motion produces sufficient angular rotation about the shoulder joint, acting as the pivot through which the vertical axis passes. This motion can be sensed to output a value for x. As portable sensing device 40 is swept in this manner, causing generation of haptic output activation signals in accordance with the invention when a line of the subject image is crossed, the user will visualize in his mind's eye a point on the above-mentioned "sheet" as a function of the user's arm position at the moment when haptic feedback is perceived. Likewise, raising or lowering the stiff arm using the shoulder as a pivot through which the horizontal axis passes generates sufficient angular rotation to produce a value for y which the user can visualize. Also, such combined motion about the two axes is translatable to a sequence of positions on the "sheet" as visualized in the user's mind. Alternatively, portable sensing device 40 may be employed to sense rotation about a joint other than the shoulder such as, for example, the elbow. Using the wrist would work to a lesser degree.

The x and y values obtained from portable sensing device 40 are compared by file server 117 against the x and y coordinates of points or pixels stored in database 101. If there is a match between an (x,y) coordinate transmitted by portable sensing device 40 and an (x,y) coordinate representing a point or pixel of a line in a two-dimensional image array, file server 117 generates a haptic output activation signal which is received by portable sensing device 40. In response to the haptic output activation signal, tactile actuation mechanism 10 of portable sensing device 40 generates an output that is perceived by the sense of touch, such as vibration, level of heat, or a mild electric shock. Optionally, the level of heat, frequency of vibration, or shock amplitude can be used to convey additional information to the user, such as a color.

Alternative implementations of position sensing unit 44 may be employed. Advantageously, two of these alternative implementations are easily embedded into a cellular or wireless telephone handset to leverage existing RF circuitry that is already present in the handset.

A first alternative implementation uses distance between the handset antenna and the human body to sense position. This provides a z output. In particular, antenna signal strength may be used as an indicator of position. Assume that a user's feet are standing in a fixed position while the user is holding a telephone handset in his hand. If the user moves his arm, body or hands, the handset will measure a change in received signal strength as a result of the user's new body position. The handset can be programmed such that, when it is in a signal reception mode, it will input signal strength changes into a scrolling feature, thus providing a one-degree of freedom input to the handset. This idea may be employed in a more sophisticated way by distinguishing between signal strength changes caused by a user's body capacitively loading the antenna and signal strength changes caused by propagational variables. Similarly, the handset may be programmed with a new function that measures antenna capacitance. Changes in antenna capacitance will be presumed to relate to changes in body position, whereas changes in signal strength may be the result of changes in body position as well as changes in propagation. Changes in antenna standing wave ratio (SWR) can also be measured to determine changes in a user's body position.

A second alternative implementation of position sensing unit 44 is to utilize a diversity antenna system on an existing cellular or wireless telephone handset. The handset is equipped with two or more antennas to measure changes in signal quality and/or strength which may be the result of changes in the position of a user's body. Relative changes in signal strength between two or more antennas can be used to predict changes that have occurred in the environment. If a handset has been moved or rotated relative to the user's body, the signal strength and signal-to-noise ratio of signals captured by each of the antennas will change. By positioning two antennas at different locations on the handset, the antennas will be equipped to measure one, two, or possibly three dimensions of motion. Received signal strength at both antennas will be less influenced by body proximity as the phone is moved further and further away from the body. By measuring capacitive loading and/or standing wave ratio of each antenna, these diversity antennas can be used to measure position, distance and rotation of the handset relative to the user. This is the basis of an input device that could be used for drawing or selecting functions on a cellular or wireless telephone handset.

Portable sensing device 40 includes a processing mechanism 42, illustratively implemented using a microcontroller or microprocessor that is equipped to accept inputs from the position sensing unit 44. Depending upon the specific characteristics of the device used to implement position sensing unit 44, this unit may generate an analog output signal, whereupon an analog to digital converter (not shown, and can be a part of processing mechanism 42) is employed to convert generated analog position information into digital form. Processing mechanism 42 controls tactile actuation mechanism 10. Depending upon the specific characteristics of the device used to implement tactile actuation mechanism 10, this device may accept digital drive signals directly from processing mechanism 42, or processing mechanism 42 may drive this device through one or more digital to analog converters (not shown). Tactile actuation mechanism 10 is preferably placed such that it is relatively far away from position sensing unit 44, or such that it is mechanically isolated from position sensing unit 44, in order to avoid generating spurious position signals.

Tactile actuation mechanism 10 is an output mechanism, controlled by processing mechanism 42, that indicates to the user a change in texture or content at the point in three-dimensional virtual environment 30 (FIGs. 1 and 2) where portable sensing device 40 is currently located. Illustratively, tactile actuation mechanism 10 uses a motor-based vibrator to vibrate a portion of portable sensing device 40 that comes into contact with a part of the user's hand. The frequency and amplitude of vibration may, but need not, be controlled by processing mechanism 42. The amplitude of vibration may be adjustable or, alternatively, the amplitude can be preset such that it is pleasant for a typical user to experience continuously. Other haptic devices may be employed to implement tactile actuation mechanism 10, so long as the response time for these devices is sufficiently fast. For example, a heating element may exhibit a response that is impractically slow, whereas low-level electrical shocks might be feasible.

Processing mechanism 42 may, but need not, accept input from an optional pushbutton 41. Pushbutton 41 is preferably positioned for index finger activation, and provides a mechanism by which software-defined functionality is activated using file server 117 and/or processing mechanism 42. In addition to pushbutton 41, portable sensing device 40 may provide other optional interfaces including one or more switches, a keypad, and one or more indicator LEDs for indicating items such as power-on, charging, and communication link status to file server 117. An optional power switch allows the unit to be switched on and off. Portable sensing device 40 may, but need not, be powered by a power supply including a rechargeable battery, charging circuitry, and protective circuitry. If a rechargeable battery is used, processing mechanism 42 may be programmed to monitor the battery and control any necessary charging functions.

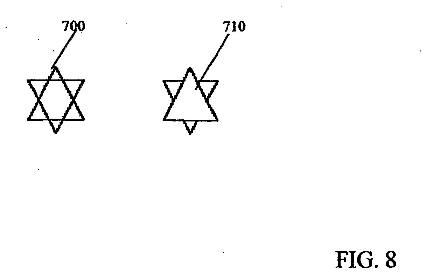

Pursuant to a further embodiment of the invention, an optional leading feedback mechanism 51 provides tactile feedback to the visually impaired person so as to enable navigation of one or more lines in the order in which these lines were drawn, and so as to enable navigation of one or more characters in sequence to form a word or a sentence. Not being able to know the order in which a two-dimensional image was made, and not being able to ascertain the order in which the image should be interpreted, can be significant limitations which create unnecessary ambiguities for a visually impaired person that are not present for those who are able to view the image directly. For example, with reference to FIG. 8, it is impossible to ascertain whether image 700 is a star or, alternatively, two different triangles drawn over each other at different times. To solve this problem, leading feedback mechanism 51 (FIG. 3) is designed to guide the user toward a drawing in three-dimensional virtual environment 30 (FIGs. 1 and 2), and also to guide the user over line paths in the drawing once the drawing is located.

Optional leading feedback mechanism 51 (FIG. 3) may be incorporated into portable sensing device 40 in the form of a motor-driven tracking ball that is rotated in a direction so as to guide the visually impaired person toward one or more lines in three-dimensional virtual environment 30 (FIG. 1). Illustratively, the tracking ball is driven by two motors along two axes of rotation under the control of processing mechanism 42 (FIG. 3). When portable sensing device 40 intersects any point in three-dimensional virtual environment 30 that is projected into one or more lines of the two-dimensional image, the tracking ball of leading feedback mechanism 51 (FIG. 3) is rotated in a direction in which the line was drawn. When device 40 is moved off a line of the drawing, leading feedback mechanism 51 will cause the tracking ball to guide the user back to the line.

Pursuant to the foregoing illustrative implementation of optional leading feedback mechanism 51, a tracking ball is motor-driven so as to permit a user to feel the direction in which the ball spins. This arrangement is somewhat similar to what is used in the type of computer mouse which has a hand-operated tracking ball, but instead of including rotational sensors to monitor the hand-operated rotation of the tracking ball about two mutually orthogonal axes, leading feedback mechanism 51 utilizes two motors to spin the tracking ball about two mutually orthogonal axes. The role of the tracking ball has been changed from that of a passive sensor to that of an active output device to direct the user in a particular direction. The tracking ball is preferably mounted within portable sensing device 40 such that a portion of the surface of the ball is exposed through the housing of portable sensing device 40. In this manner, the pad of one finger, such as the middle finger, of the user can contact the ball. The housing of portable sensing device 40 is preferably fabricated in such a way that a surface of the tracking ball is beneath the middle finger when the device is held in the user's hand.

The housing of portable sensing device 40 should be shaped such that the device can be held securely by the palm and fingers while, at the same time, not requiring the palm or the fingers to contact pushbutton 41 or the tracking ball.

Preferably, the tracking ball of optional leading feedback mechanism 51 should be exposed through the housing of portable sensing device 40 such that the tracking ball presents a surface of approximately 5-10 millimeters in diameter, or roughly the size of the meaty portion of an average adult human finger. The surface material and profile of the tracking ball is preferably selected to provide relatively high traction on the user's fingertip, while being resistant to contamination from skin products such as oils produced by the skin as well as skin lotions and dirt.

In cases where optional leading feedback mechanism 51 is employed, tactile actuation mechanism 10 may (but need not) be combined with leading feedback mechanism 51. For example, tactile actuation mechanism 10 may be implemented by vibrating the tracking ball, or by vibrating a separate part of the housing of portable sensing device 40 that contacts a finger or at least a portion of the palm of the user's hand.

Operation of portable sensing device 40 typically involves a user holding the device in his/her hand and moving it around in three-dimensional virtual environment 30 (FIGs. 1 and 2) at a comfortable arms' length, receiving tactile information from leading feedback mechanism 51 and tactile actuation mechanism 10, and optionally activating pushbutton 41. Preferably, the user is able to gently rest his/her finger on a moving surface of the tracking ball. It is expected, however, that users will push on the ball with different levels of force. To that end, the underlying electromechanical system of driving motors should be equipped to maintain the maximum possible ball velocity within a safe range of applied pressures.

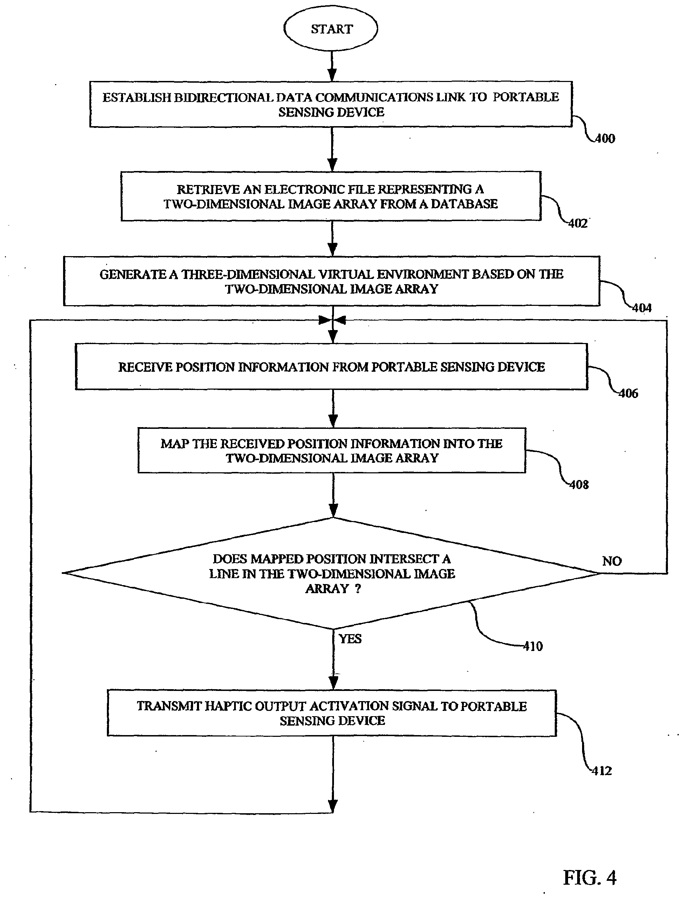

FIG. 4 is a flowchart setting forth an operational sequence performed by the file server 117 of FIG. 3 according to a preferred embodiment of the present invention. The operational sequence commences at block 400 where a bidirectional data communications link is established to portable sensing device 40 (FIGs. 1 and 3). At block 402 (FIG. 4), an electronic file of graphical information data representing a two-dimensional image is retrieved from database 101 (FIG. 1). Generating such a file is within the capability of any person ordinarily skilled in the art and, thus, details thereof are not deemed necessary.

Next, a three-dimensional virtual environment is generated based on the two-dimensional image array (FIG. 4, block 404). How this is done depends on the specific type of portable sensing device 40 that is selected for use in implementing this invention. The three-dimensional position data and how that is projected (or mapped) into the two-dimensional image plane may vary depending on how device 40 operates and the nature of its output signal. For the above-described preferred 3-D gyroscopic mouse known as the Gyrations Ultra Cordless Optical Mouse™, it so happens that the z coordinate is really unnecessary and, therefore, is not actually output for the present invention. As should be apparent from the explanation provided above, with image plane 20 being virtually set up as an artist's easel and with the user moving the position sensing device 40 as a brush, the position of a crossing point in any of planes 21, 22, etc. depicted in Fig. 2 is projected into two-dimensional image plane 20 by setting z=0. Therefore, there is really no need, or advantage, to even determine a value for z if it is ultimately to be set to zero anyway. However, for an alternative device 40 the z coordinate may be important and would be needed in order to project the crossing point correctly into plane 20. It is for this reason that block 404 is depicted as part of making the present invention generally applicable to all types of devices that are usable for position sensing device 40.

Position information is received from the portable sensing device 40 at block 406. At block 408, the received position information is mapped into the two-dimensional image array. A test is performed at block 410 to ascertain whether the mapped position intersects, i.e. is located on, or sufficiently near to, a line in the two-dimensional image array. As explained above, this involves comparing the x and y values obtained from portable sensing device 40 against the x and y coordinates of points or pixels stored in database 101. If there is a match between an (x,y) coordinate transmitted by portable sensing device 40 and an (x,y) coordinate representing a point or pixel of a line in a two-dimensional image array, file server 117 generates a haptic output activation signal which is received by portable sensing device 40 (block 412), and the program loops back to block 406. The negative branch from block 410 loops back to block 406.

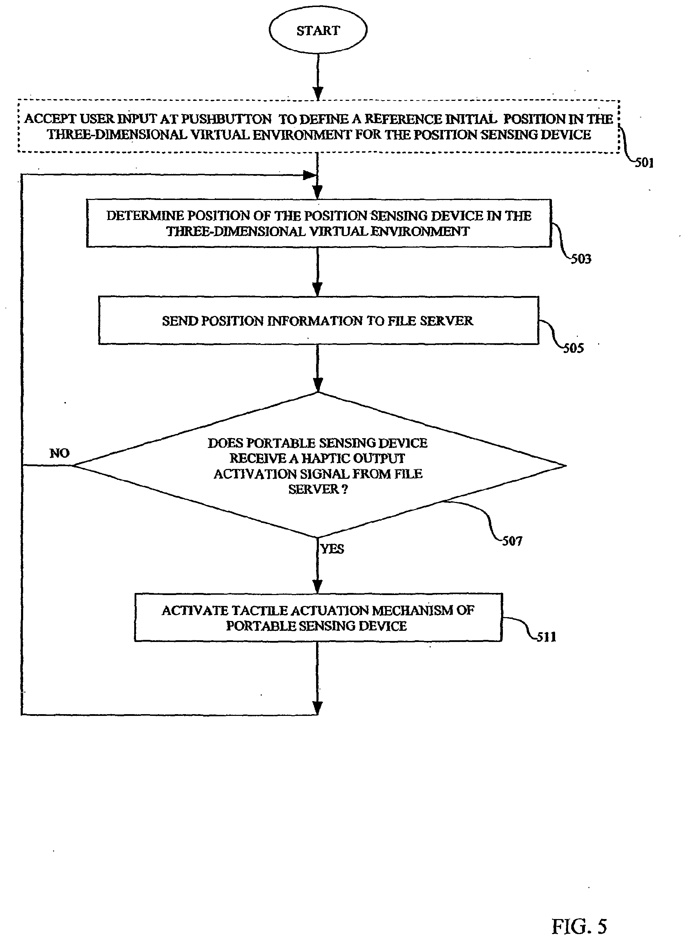

FIG. 5 is a flowchart setting forth an operational sequence performed by the portable sensing device 40 of FIGs. 1 and 3 according to a preferred embodiment of the present invention.

An optional preliminary step is performed at block 501 to accept user input at a pushbutton that defines a reference initial position in the three-dimensional virtual environment for the position sensing device. The position of the position sensing device in the three-dimensional virtual environment is determined (block 503). At block 505, the determined position information is sent to file server 117 (FIG. 3). A test is performed at block 507 to ascertain whether the portable sensing device 40 receives a haptic output activation signal from the file server 117. If so, the portable sensing device activates its tactile actuation mechanism 10 (block 511), and the program loops back to block 503. The negative branch from block 507 leads to block 503.

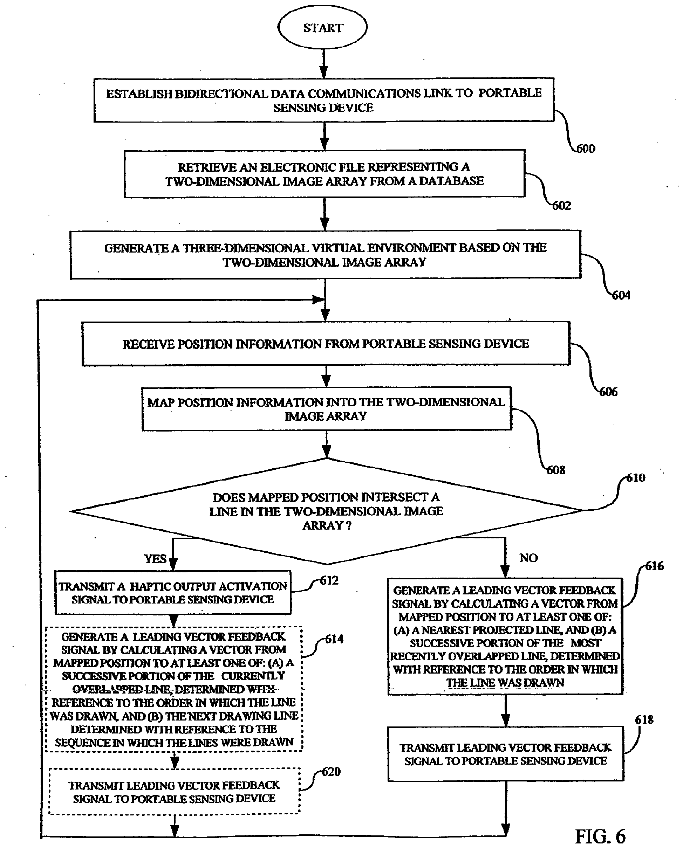

FIG. 6 is a flowchart setting forth an operational sequence performed by the file server 117 of FIG. 3 according to a further embodiment of the present invention. A bidirectional data communications link to the portable sensing device is established at block 600. At block 602, an electronic file representing a two-dimensional image array is retrieved from the database. A three-dimensional virtual environment is generated based on the two-dimensional image array (block 604). Position information is received from the portable sensing device 40 (block 606), and this position information is mapped into the two-dimensional image array (block 608). A test is performed at block 610 to ascertain whether the mapped position intersects a line in the two-dimensional image array. If so, a haptic output activation signal is transmitted to the portable sensing device 40 (block 612). Optionally, a leading vector feedback signal is generated by calculating a vector from the mapped position to a successive portion of the currently overlapped line, determined with reference to the order in which the line was drawn (identified as "A" in block 614). If the end of the currently overlapped line has been reached, then a vector is calculated to the next drawing line, determined with reference to the order in which the line was drawn (identified as "B" in block 614). The calculation of such vectors is well within the capability of any person with ordinary skill in the art and, therefore, details thereof are not deemed necessary. An optional leading vector feedback signal is transmitted to the portable sensing device (block 620), and the program loops back to block 606.

In order to enable generation of a leading feedback signal, it is necessary to store the graphical information data representing the image in a time ordered manner. Each image element is stored in the order it was drawn. This makes it possible for step 602 to retrieve each element in its proper place in this time ordered sequence in order to provide the leading feedback signal. As used herein, the term "image element" applies to points, lines, line segments and any other portion of an image that lends itself to being stored, retrieved and processed as a unit in connection with implementing the present invention.

The negative branch from block 610 leads to block 616 where a leading vector feedback signal is generated by calculating a vector from the mapped position to at least one of: (a) a nearest projected line, and (b) a successive portion of the most recently overlapped line, determined with reference to the order in which the line was drawn. At block 618, a leading vector feedback signal is transmitted to the portable sensing device. The program then loops back to block 606.

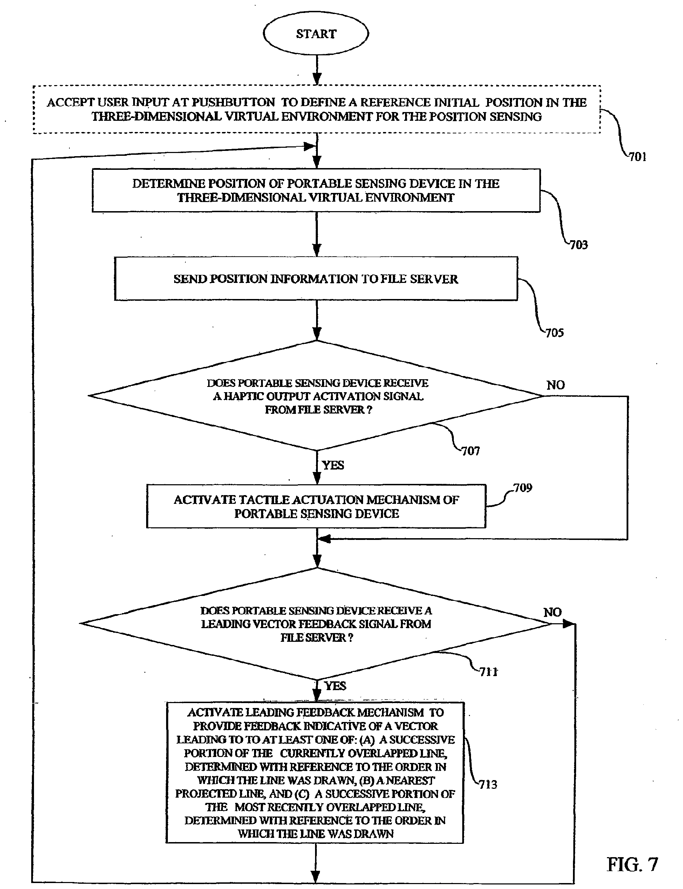

FIG. 7 is a flowchart setting forth an operational sequence performed by the portable sensing device 40 of FIGs. 1 and 3 according to a further embodiment of the present invention. The operational sequence commences at block 701 where user input at a pushbutton on the portable sensing device is accepted for the purpose of defining a reference initial position in the three-dimensional virtual environment. At block 703, the position of the portable sensing device 40 in the three-dimensional virtual environment is determined. This position information is sent to the file server 117 (block 705). At block 707, a test is performed to ascertain whether the portable sensing device receives a haptic output activation signal from the file server. If so, the tactile actuation mechanism of the portable sensing device is activated (block 709). The program then progresses to block 711. The negative branch from block 707 leads to block 711.

At block 711, a test is performed to ascertain whether the portable sensing device 40 receives a leading vector feedback signal from the file server 117. If so, the leading feedback mechanism 51 is activated to provide feedback representing a vector leading to at least one of: (a) a successive portion of the currently overlapped line, determined with reference to the order in which the line was drawn, (b) a nearest projected line, and (c) a successive portion of the most recently overlapped line, determined with reference to the order in which the line was drawn (block 713). The program then loops back to block 703. The negative branch from block 711 leads to block 703.

The invention can be employed to enable a person to perceive graphical information using the sense of touch such as, for example, when that person's eyesight is otherwise engaged or when sight is not possible, as when it is too dark to see. One advantageous application of the invention is to enable a visually impaired person to perceive graphical information in the form of an electronic text document that contains any of alphabetic, numeric and punctuation characters, by using the sense of touch. As recognized above, Braille has long been available to communicate alphanumeric characters to visually impaired persons. However, with the increased proliferation of text in electronic form, it would be highly advantageous to readily communicate the text in electronic form to the visually impaired person without the cumbersome intermediate task of statically printing it to Braille. The present invention can achieve that by providing a dynamic, mobile Braille-like interface, as follows.

The text document is readily converted electronically into a file in which each character is associated with the x, y coordinates in a two-dimensional image plane that are associated with it. This is stored in database 101 just as any other image of graphic information, as disclosed above. Position information in three-dimensional virtual environment 30 is gathered by portable sensing device 40 (FIGs. 1 and 3) and projected into the two-dimensional image of the electronic document. This is done, for example, as shown by blocks 600, 602, 604, 606 and 608. Then, instead of block 610, this embodiment determines whether the mapped position intersects a character in the document. If so, an output signal is generated which is unique to that character, and that signal serves to actuate a tactile pad 63 (Fig. 3). Tactile pad 63, as is well known, includes an array of pins that are individually drivable to extend above a normally flat top surface and to engage a fingertip placed thereon so as to output a Braille character. The Braille character is identifiable by the number and placement of the pins that are driven to extend upward so as to be sensed by the fingertip. Detailed information is available in published International Application No. PCT WO2004019752, and the article "Towards a tactile communication system with dialog-based tuning" by Wilks, C. et al. published in Proceedings of the Int. Joint Conf. On Neural Networks (ICINN) 2003, Portland, Oregon 2003, pp. 1832-1837.

Tactile pad 63 is preferably stationary and is coupled to sensor 117. Fig. 3 shows a wireless coupling, but of course it can be a wire connection as well. Also, one contemplated variation is to include tactile pad 63 as part of portable sensing device 40.

Pursuant to a further embodiment of the invention, leading feedback mechanism 51 provides tactile feedback to the visually impaired person so as to enable navigation within the text document to proceed through a plurality of characters in sequence to form one or more words. Illustratively, the leading feedback mechanism 51 can be used which, as described above, is incorporated into portable sensing device 40 in the form of a motor driven tracking ball that is rotated in a direction so as to guide the visually impaired person toward one or more characters in three-dimensional virtual environment 30. If portable sensing device 40 intersects a point in three-dimensional virtual environment 30 that is projected into a character which, for example, is the first letter "W" of the word "WIND", the leading feedback mechanism is rotated in a direction to lead the user toward the immediately successive character "I" in the sequence of characters forming the word (or it can be the next word in a sentence). Alternatively, the other above-described leading feedback mechanisms can also be used.

Pursuant to a further embodiment of the invention, server 117 can be provided with at least one of handwriting recognition software and optical character recognition software for interpreting two-dimensional image files generated by scanning a printed or handwritten document. Such interpretations may be conveyed to visually impaired persons using an optional electronic text-to-speech synthesizer or tactile pad 63. This approach is useful, for example, when the two-dimensional image file is a map that includes roads marked with alphanumeric labels.

Pursuant to a further embodiment of the invention, pushbutton 41 of portable sensing device 40 is arranged for selecting one of a plurality of operational modes including read mode and drawing mode. In read mode, portable sensing device 40 provides tactile output as described previously in connection with at least one of lines and characters. However, the two-dimensional image 20 (FIG. 1) or electronic document 26 (FIG. 2) is not changed or edited. In drawing mode, the two-dimensional image or document is edited in accordance with a sensed position of portable sensing device 40 in the three-dimensional virtual environment. Optionally, portable sensing device 40 provides additional control buttons for controlling additional features such as changing the color or thickness of lines that are drawn in the drawing mode. In this manner, the invention is not solely a device for providing output to a user. Visually impaired users can use the device to contribute to hand-drawn communication through the use of simple control buttons, allowing the user's strokes to be "drawn," transmitted to a file server, and either imaged on another user's graphical display or haptic interface.

Pursuant to a further embodiment of the invention, portable sensing device 40 is equipped with an orientation sensor for determining the orientation of a reference plane of portable sensing device 40 relative to an orientation of a reference plane in three-dimensional virtual environment 30. The determined orientation is used to calculate a calibration factor for application to a sensed position, so as to enable a user to hold portable sensing device 40 in any of a plurality of rotational orientations within the three-dimensional virtual environment.

Pursuant to a further embodiment of the invention, portable sensing device 40 is used as a control mechanism for navigating menu systems that are laid out virtually in front of the user, so the user can manipulate systems without a visual interaction. This feature is advantageous for use in low light situations or, for example, situations in which the user's visual sense is otherwise occupied with another task.

Pursuant to a further embodiment of the invention, tactile actuation mechanism 10 (FIG. 3) provides an indication of different line textures, different alphabetical characters, or different numerical characters by vibrating at different frequencies, allowing the user to distinguish between different aspects of an image. In the case of the aforementioned Scribble™ feature which permits each of a plurality of authors to contribute a portion of a drawing, a unique vibrational frequency could be assigned to each of these authors. Also, a unique vibrational frequency could be assigned to each of a plurality of image colors.

Although various embodiments of the present invention have been described in detail above, various modifications thereof will readily occur to anyone with ordinary skill in the art. For example, instead of the rotating ball used in leading feedback mechanism 51, a mechanically actuated tilting paddle can be used which tilts in a direction so as to guide the visually impaired individual. Also, the position of the rotating ball can be under the thumb rather than the middle finger.

## Claims

1. System for providing a haptic feedback for enabling a visually impaired person to mentally visualize a two-dimensional image that includes at least one line, comprising:
means (101) for storing graphical information data corresponding to the image;
a portable, handheld device (40) including three dimensional position sensing means (44), manually movable by the visually impaired person through a three dimensional space within reach, for providing a position signal representative of a current position within said space to where said device is moved by the person;
means (46) for relating the device position signal representative of a current position within said space to a position signal in the two-dimensional plane of the image;
means for comparing (117, 410) said stored graphical information data with said position signal in the two-dimensional plane to generate a haptic output activation signal when the current position signal in the two-dimensional plane is determined to overlap an image line; and
a tactile feedback mechanism (10, 42) in said portable device responsive to said haptic output activation signal for providing to the person a tactile indication to create a mental image that the current position of said device is at a line of the image.

2. The system of claim 1, wherein said graphical information data is stored such that elements of said image which were drawn in a particular time ordered sequence are stored such that the time ordered sequence in which said line elements were drawn is determinable, and further comprising a leading feedback determining means responsive to said position signal for generating a leading feedback control signal, and a leading feedback mechanism (51) in said device responsive to said leading feedback control signal for providing a directional tactile indication to the visually impaired person for moving said device toward a particular image element based on said time ordered sequence.

3. The system as claimed in claim 2, wherein said leading feedback mechanism (51) comprises:
a motor-driven trackball adapted to be in contact with a finger of the person, and a drive control means for spinning said trackball in a direction toward said particular image element.

4. The system of claim 1, further comprising a tactile pad adapted to be in contact with a finger of the person and having means for selectively forming a Braille counterpart of the image being an alphanumeric character.

5. The system as claimed in one of the previous claims 1 to 4, wherein said storing means (101) and comparing means are housed in a stationary unit, and
further comprising means for communicating said stationary unit and said device with each other.

6. The system as claimed in one of the previous claims 1 to 5, wherein said tactile feedback mechanism is arranged to provide a vibration being controllably variable to represent a characteristic of the image.

7. The system as claimed in one of the previous claims 1 to 6, wherein said position sensing means includes a gyroscope mechanism.

8. A method for providing a haptic feedback for enabling a visually impaired person to mentally visualize an image that includes at least one line, comprising:
storing graphical information data corresponding to the image;
providing a position signal (703, 705) with a portable, handheld device including three dimensional position sensing means, manually movable by the visually impaired person through a three-dimensional space within reach, said position signal being representative of a current position within said space to where said device is moved by the person;
relating the device position signal representative of a current position within said space to a position signal in the two-dimensional plane of the image;
comparing said stored graphical information data with said position signal in the two-dimensional plane to generate a haptic output activation signal (410, 610) when the current position signal in the two-dimensional plane is determined to overlap an image line ; and
responsive to said haptic output activation signal, providing to the person a tactile indication (511) to create a mental image that the current position of said device is at a line of the image.

9. The method of claim 8, the image including a plurality of line elements drawn in a particular time ordered sequence, and wherein in the storing step, the graphical information data corresponding to the image is stored such that the time ordered sequence in which said line elements were drawn is determinable; and wherein in the step of providing a directional tactile indication, said directional tactile indication comprises (618) an indication for moving said device toward a particular image element based on said time ordered sequence.

10. The method of claim 9, wherein the image includes a plurality of line elements forming alphanumeric characters at respective character locations; and selectively forming, on a tactile pad (63), a Braille counterpart of the alphanumeric character at said particular one of said character locations when the device reaches a position corresponding to said particular one of said character locations.

## Patentansprüche

1. System zum Bereitstellen einer haptischen Rückmeldung, um es einer sehbeeinträchtigten Person zu ermöglichen, sich mental ein zweidimensionales Bild vorzustellen, das mindestens eine Zeile aufweist, umfassend:
Mittel (101) zum Speichern von dem Bild entsprechenden grafischen Informationsdaten;
eine tragbare Handheld-Einrichtung (40), aufweisend Abtastmittel (44) einer dreidimensionalen Position, von der sehbeeinträchtigten Person durch einen dreidimensionalen Raum in Reichweite manuell bewegbar, um ein Positionssignal bereitzustellen, das eine aktuelle Position in dem Raum wiedergibt, zu der die Einrichtung von der Person bewegt wird;
Mittel (46) zum Inbeziehungsetzen des Positionssignals der Einrichtung, das eine aktuelle Position in dem Raum wiedergibt, mit einem Positionssignal in der zweidimensionalen Ebene des Bildes;
Mittel zum Vergleichen (117, 410) der gespeicherten grafischen Informationsdaten mit dem Positionssignal in der zweidimensionalen Ebene zum Erzeugen eines haptischen Ausgabeaktivierungssignals, wenn festgestellt wird, dass das aktuelle Positionssignal in der zweidimensionalen Ebene eine Bildlinie überlappt; und
einen taktilen Rückmeldemechanismus (10, 42) in der tragbaren Einrichtung in Abhängigkeit von dem haptischen Ausgabeaktivierungssignal, um für die Person eine taktile Angabe bereitzustellen, um ein mentales Bild zu erzeugen, wonach die aktuelle Position der Einrichtung auf einer Bildzeile ist.

2. System nach Anspruch 1, wobei die grafischen Informationsdaten so gespeichert sind, dass Elemente des Bildes, die in einer bestimmten zeitlich geordneten Sequenz gezeichnet wurden, so gespeichert sind, dass die zeitlich geordnete Sequenz, in der die Zeilenelemente gezeichnet wurden, ermittelt werden kann, und
ferner umfassend Bestimmungsmittel der Führungsrückmeldung in Abhängigkeit von dem Positionssignal zum Erzeugen eines Steuerungssignals der Führungsrückmeldung, sowie einen Führungsrückmeldemechanismus (51) in der Einrichtung in Abhängigkeit von dem Steuerungssignal der Führungsrückmeldung zum Bereitstellen einer taktilen Richtungsangabe für die sehbeeinträchtigte Person zum Bewegen der Einrichtung in Richtung auf ein bestimmtes Bildelement, basierend auf der zeitlich geordneten Sequenz.

3. System nach Anspruch 2, wobei der Führungsrückmeldemechanismus (51) umfasst:
einen motorischen Trackball, dafür eingerichtet, mit einem Finger der Person in Kontakt zu stehen, und ein Antriebssteuerungsmittel zum Drehen des Trackballs in eine Richtung zu dem bestimmten Bildelement.

4. System nach Anspruch 1, ferner umfassend ein taktiles Pad, dafür eingerichtet, mit einem Finger der Person in Kontakt zu stehen, und aufweisend Mittel zum selektiven Ausbilden eines Brailleschrift-Pendants des Bildes, das ein alphanumerisches Zeichen ist.

5. System nach einem der vorstehenden Ansprüche 1 bis 4, wobei die Speichermittel (101) und Vergleichsmittel in einer stationären Einheit umfasst sind, und
ferner umfassend Mittel zur Kommunikation der stationären Einheit und der Einrichtung miteinander.

6. System nach einem der vorstehenden Ansprüche 1 bis 5, wobei der taktile Rückmeldemechanismus eingerichtet ist, um eine Vibration bereitzustellen, die regelbar variabel ist, um ein Kennmerkmal des Bildes wiederzugeben.

7. System nach einem der vorstehenden Ansprüche 1 bis 6, wobei die Positionsabtastmittel einen Gyroskop-Kreiselmechanismus aufweisen.

8. Verfahren zum Bereitstellen einer haptischen Rückmeldung, um es einer sehbeeinträchtigten Person zu ermöglichen, sich mental ein Bild vorzustellen, das mindestens eine Zeile aufweist, umfassend:
Speichern von dem Bild entsprechenden grafischen Informationsdaten;
Bereitstellen eines Positionssignals (703, 705) mit einer tragbaren Handheld-Einrichtung, aufweisend Abtastmittel einer dreidimensionalen Position, von der sehbeeinträchtigten Person durch einen dreidimensionalen Raum in Reichweite manuell bewegbar, wobei das Positionssignal eine aktuelle Position in dem Raum wiedergibt, zu der die Einrichtung von der Person bewegt wird;
Inbeziehungsetzen des Positionssignals der Einrichtung, das eine aktuelle Position in dem Raum wiedergibt, mit einem Positionssignal in der zweidimensionalen Ebene des Bildes;
Vergleichen der gespeicherten grafischen Informationsdaten mit dem Positionssignal in der zweidimensionalen Ebene zum Erzeugen eines haptischen Ausgabeaktivierungssignals (410, 610), wenn festgestellt wird, dass das aktuelle Positionssignal in der zweidimensionalen Ebene eine Bildlinie überlappt; und
in Abhängigkeit von dem haptischen Ausgabeaktivierungssignal: Bereitstellen einer taktilen Angabe (511) für die Person, um ein mentales Bild zu erzeugen, wonach die aktuelle Position der Einrichtung auf einer Bildzeile ist.

9. Verfahren nach Anspruch 8, wobei das Bild eine Mehrzahl von in einer bestimmten zeitlich geordneten Sequenz gezeichneten Zeilenelementen aufweist und wobei die dem Bild entsprechenden grafischen Informationsdaten in dem Speicherschritt so gespeichert werden, dass die zeitlich geordnete Sequenz, in der die Zeilenelemente gezeichnet wurden, ermittelt werden kann; und wobei in dem Schritt des Bereitstellens einer taktilen Richtungsangabe die taktile Richtungsangabe eine Angabe zum Bewegen der Einrichtung in Richtung auf ein bestimmtes Bildelement, basierend auf der zeitlich geordneten Sequenz, umfasst (618).

10. Verfahren nach Anspruch 9, wobei das Bild eine Mehrzahl von Zeilenelementen aufweist, die an entsprechenden Zeichenpositionen alphanumerische Zeichen bilden; und selektives Ausbilden, auf einem taktilen Pad (63), eines Brailleschrift-Pendants des alphanumerischen Zeichens an der bestimmten einen der Zeichenpositionen, wenn die Einrichtung eine Position erreicht, die der bestimmten einen der Zeichenpositionen entspricht.

## Revendications

1. Système de retour haptique destiné à permettre à une personne malvoyante de visualiser mentalement une image bidimensionnelle qui inclut au moins une ligne, comprenant :
des moyens (101) pour stocker des données d'informations graphiques correspondant à l'image ;
un dispositif manuel portable (40) incluant des moyens de détection de position tridimensionnels (44), déplaçables manuellement par la personne malvoyante dans un espace tridimensionnel à portée de main, pour produire un signal de position représentatif d'une position courante dans ledit espace dans lequel ledit dispositif est déplacé par la personne ;
des moyens (46) pour associer le signal de position du dispositif représentatif d'une position courante dans ledit espace à un signal de position dans le plan bidimensionnel de l'image ;
des moyens pour comparer (117, 410) lesdites données d'informations graphiques stockées audit signal de position dans le plan bidimensionnel pour générer un signal d'activation de sortie haptique lorsqu'il est déterminé que le signal de position courante dans le plan bidimensionnel chevauche une ligne d'image ; et
un mécanisme de retour tactile (10, 42) dans ledit dispositif portable, réagissant audit signal d'activation de sortie haptique pour fournir à la personne une indication tactile afin de créer une image mentale du fait que la position courante dudit dispositif se trouve au niveau d'une ligne de l'image.

2. Système selon la revendication 1, dans lequel lesdites données d'informations graphiques sont stockées de telle sorte que des éléments de ladite image qui ont été dessinés selon une séquence ordonnée dans le temps particulière soient stockés de telle manière que la séquence ordonnée dans le temps selon laquelle lesdits éléments de lignes ont été dessinés soit déterminable, et
comprenant en outre des moyens de détermination de retour directionnel réagissant audit signal de position pour générer un signal de commande de retour directionnel, et un mécanisme de retour directionnel (51) dans ledit dispositif réagissant audit signal de commande de retour directionnel pour fournir une indication tactile de direction à la personne malvoyante pour le déplacement dudit dispositif vers un élément d'image particulier suivant ladite séquence ordonnée dans le temps.

3. Système selon la revendication 2, dans lequel ledit mécanisme de retour directionnel (51) comprend :
une boule de commande motorisée adaptée pour être en contact avec un doigt de la personne, et des moyens de commande d'entraînement pour faire tourner ladite boule de commande dans une direction allant vers ledit élément d'image particulier.

4. Système selon la revendication 1, comprenant en outre un pavé tactile adapté pour être en contact avec un doigt de la personne et ayant des moyens destinés à former sélectivement un équivalent en Braille de l'image qui est un caractère alphanumérique.

5. Système selon l'une des revendications précédentes 1 à 4, dans lequel lesdits moyens de stockage (101) et des moyens de comparaison sont logés dans une unité fixe, et
comprenant en outre des moyens pour la communication entre ladite unité fixe et ledit dispositif.

6. Système selon l'une des revendications précédentes 1 à 5, dans lequel ledit mécanisme de retour tactile est conçu pour produire une vibration à variation contrôlable pour représenter une caractéristique de l'image.

7. Système selon l'une des revendications précédentes 1 à 6, dans lequel lesdits moyens de détection de position incluent un mécanisme de gyroscope.

8. Procédé de retour haptique destiné à permettre à une personne malvoyante de visualiser mentalement une image qui inclut au moins une ligne, comprenant :
le stockage de données d'informations graphiques correspondant à l'image ;
la production d'un signal de position (703, 705) par un dispositif manuel portable incluant des moyens de détection de position tridimensionnels, déplaçables manuellement par la personne malvoyante dans un espace tridimensionnel à portée de main, ledit signal de position étant représentatif d'une position courante dans ledit espace dans lequel ledit dispositif est déplacé par la personne ;
l'association du signal de position du dispositif représentatif d'une position courante dans ledit espace à un signal de position dans le plan bidimensionnel de l'image ;
la comparaison desdites données d'informations graphiques stockées audit signal de position dans le plan bidimensionnel pour générer un signal d'activation de sortie haptique (410, 610), lorsqu'il est déterminé que le signal de position courante dans le plan bidimensionnel chevauche une ligne d'image ; et
en réponse audit signal d'activation de sortie haptique, la fourniture à la personne d'une indication tactile (511) afin de créer une image mentale du fait que la position courante dudit dispositif se trouve au niveau d'une ligne de l'image.

9. Procédé selon la revendication 8, l'image incluant une pluralité d'éléments de lignes dessinés selon une séquence ordonnée dans le temps particulière, et dans lequel, à l'étape de stockage, les données d'informations graphiques correspondant à l'image sont stockées de telle manière que la séquence ordonnée dans le temps selon laquelle lesdits éléments de lignes ont été dessinés soit déterminable ; et dans lequel, à l'étape de fourniture d'une indication tactile de direction, ladite indication tactile de direction comprend (618) une indication de déplacement dudit dispositif vers un élément d'image particulier suivant ladite séquence ordonnée dans le temps.

10. Procédé selon la revendication 9, dans lequel l'image inclut une pluralité d'éléments de lignes formant des caractères alphanumériques à des positions de caractères respectives ; et
la formation sélective, sur un pavé tactile (63), d'un équivalent en Braille du caractère alphanumérique à ladite position particulière desdites positions de caractères lorsque le dispositif atteint une position correspondant à ladite position particulière desdites positions de caractères.
